# FASCICULE DE BREVET EUROPEEN

(11) **EP 3 392 092 B1**
(45) Date de publication et mention de la délivrance du brevet: **27.11.2019**
(21) Numéro de dépôt: 18160873.8
(22) Date de dépôt: 09.03.2018
(51) Int. Cl.: B60R 19/18, B60R 19/34

(54) **ENSEMBLE D''EXTREMITE NOTAMMENT ARRIERE D''UN VEHICULE AUTOMOBILE**
ENDANORDNUNG, INSBESONDERE HECKTEIL EINES KRAFTFAHRZEUGS
END ASSEMBLY, IN PARTICULAR A REAR END ASSEMBLY OF A MOTOR VEHICLE

(30) Priorité: 21.04.2017 FR 1753511
(43) Date de publication de la demande: 24.10.2018
(73) Titulaire: PSA Automobiles SA, 78300 Poissy (FR)
(72) Inventeur: BOUTIN, Pierre Emmanuel, 92100 Boulogne Billancourt (FR); JEANNEAU, Clément, 92100 Boulogne Billancourt (FR)

(56) Documents cités:
- US-A1- 2009 140 546
- US-A1- 2010 253 103

## Description

La présente invention concerne un ensemble d'extrémité de véhicule, notamment automobile.

Elle s'applique en particulier à un ensemble arrière d'un véhicule automobile.

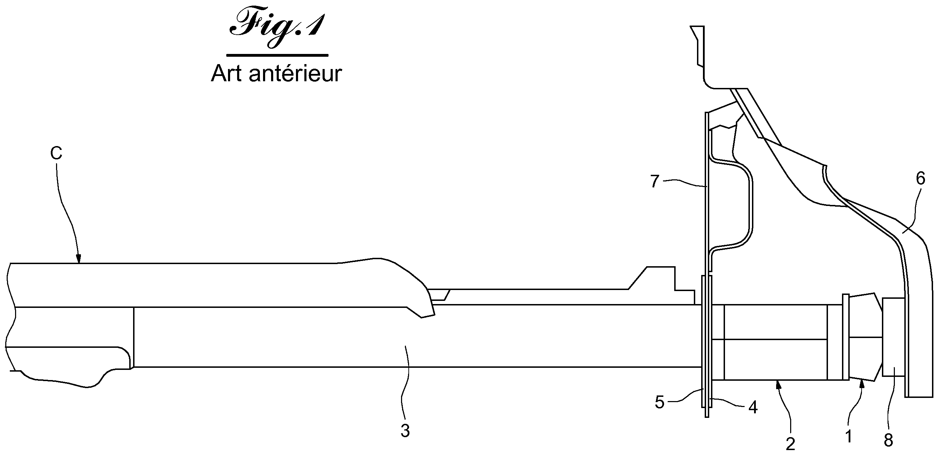

La figure 1 est une vue en coupe longitudinale d'un ensemble d'extrémité arrière d'un véhicule suivant l'art antérieur.

Cet ensemble arrière comprend une poutre arrière transversale de pare-chocs 1 pouvant être légèrement cintrée dont les deux extrémités opposées sont reliées chacune à l'extrémité avant d'un absorbeur de chocs 2 à déformation par compression dont l'extrémité arrière est reliée à l'avant de l'un de deux longerons 3 de la caisse C du véhicule. Chaque absorbeur de chocs 2 comprend à son extrémité arrière une platine 4 qui est fixée, par exemple par des boulons non représentés, à une platine 5 solidaire de l'extrémité avant du longeron correspondant 3 de manière à fixer l'absorbeur de chocs 2 en prolongement du longeron 3.

L'ensemble arrière comprend en outre une peau de pare-chocs 6 s'étendant suivant une direction transversale au véhicule et qui couvre la poutre 1 et les deux absorbeurs de chocs 2, et un panneau arrière 7 dont la partie inférieure est fixée entre les deux platines 4, 5 des absorbeurs de chocs 2 et des longerons 3.

L'ensemble arrière comprend également deux cales incompressibles 8 chacune intercalée entre chaque extrémité de la poutre transversale 1 au niveau de l'absorbeur de chocs correspondant 2 et la peau de pare-chocs 6. Chaque cale arrière 8 peut présenter une forme en nid d'abeilles en une matière plastique dure ou rigide.

Les cales arrière en matière plastique 8 sont ajoutées lorsque le style extérieur du véhicule est trop proéminent par rapport à la structure de ce véhicule pour éviter les vides entre la peau de pare-chocs 6 et la poutre transversale 1 et ajuster les différents jeux et affleurement des différents éléments de l'ensemble arrière du véhicule.

Les constructeurs d'automobiles, dans le but de diminuer les coûts de réparation de leurs véhicules automobiles, soumettent chacun de ces véhicules à un choc normé appelé choc réparabilité arrière. A l'issu de ce choc, un expert établit la liste de toutes les pièces endommagées pour en ressortir un chiffrage économique sur le coût de réparation du véhicule et, bien entendu, moins de pièces seront endommagées, plus faible sera le coût de réparation du véhicule.

Sur certaines silhouettes de véhicules, en raison des contraintes liées à d'autres chocs, le dispositif d'absorption de chocs ci-dessus décrit doit être dissymétrique au niveau des ses deux absorbeurs de chocs 2.

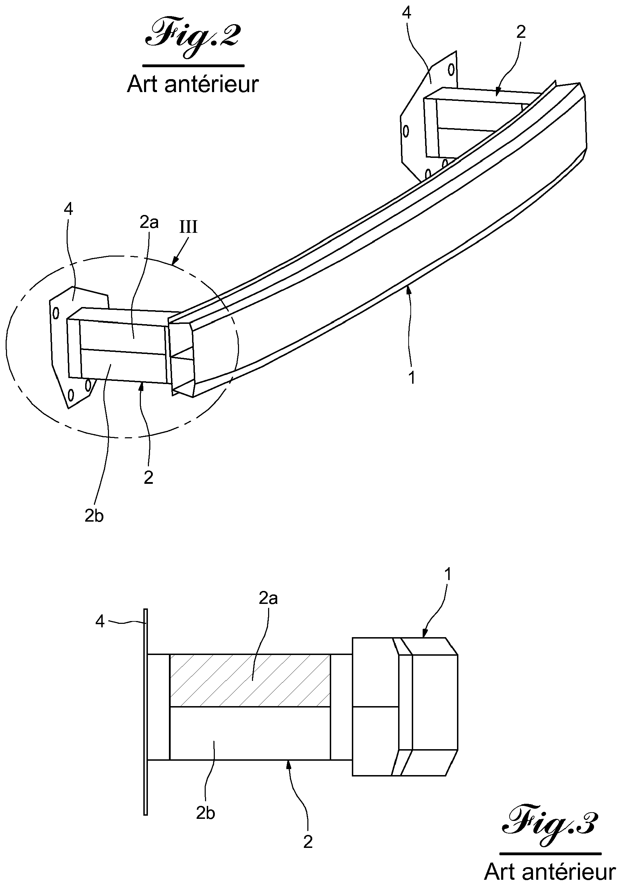

Ainsi, comme cela ressort des figures 2 et 3, chaque absorbeur de chocs 2 solidarisé à chacune des extrémités de la poutre ou traverse arrière 1 comporte une partie ou section longitudinale supérieure 2a, symbolisée par des hachures en figure 3, d'une rigidité moindre ou inférieure à la rigidité de la partie ou section inférieure longitudinale 2b de cet absorbeur de chocs, ce qui signifie qu'il faut moins d'efforts pour faire plier ou comprimer longitudinalement la partie haute 2a que la partie basse 2b de chaque absorbeur de chocs 2.

Au cours d'un choc arrière sur un véhicule équipé du dispositif ou système d'absorption arrière à absorbeurs de chocs 2 dissymétriques le mur qui est percuté par l'arrière du véhicule vient appuyer sur chaque cale arrière indéformable 8 qui, à son tour, s'appuie sur le système d'absorption de chocs arrière.

Avec des cales standards 8 présentant en section transversale une forme rectangulaire d'une section sensiblement identique à la section transversale de chaque absorbeur de chocs 2, l'effort transmis par le mur est transmis à toute la section de l'absorbeur correspondant 2.

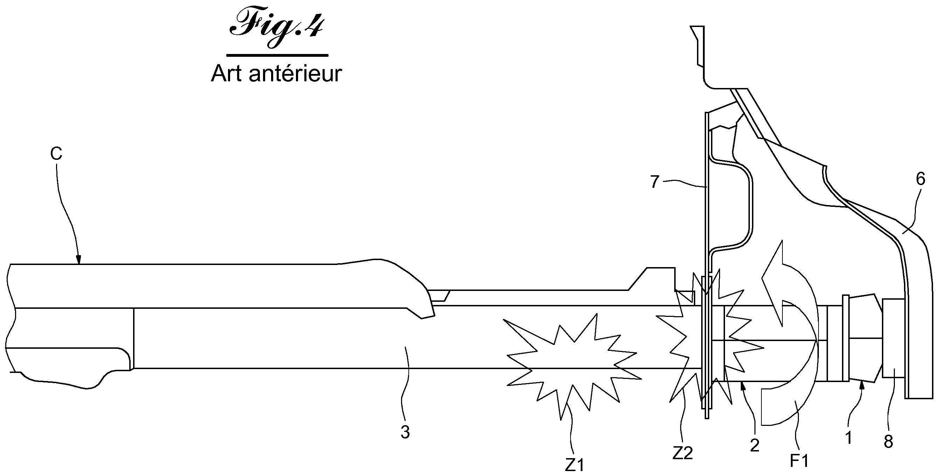

Chaque absorbeur de chocs 2 étant moins raide en partie supérieure 2a, il plie ou se déforme naturellement plus vite en partie haute qu'en partie basse et cette instabilité entraine des dommages non prévus dus à un effort transversal transmis à l'ensemble arrière symbolisé par la flèche F1 en figure 4 et se traduisant aux emplacements impactés symbolisés en Z1 et Z2 à la figure 4 par une déformation du panneau arrière 7 et de sa doublure et une déformation des longerons 3, ce qui entraine des coûts supplémentaires pour la réparation du véhicule.

Le document FR 3 033 748 divulgue un véhicule comprenant une poutre transversale de pare-chocs avant ou arrière et dont la face destinée à recevoir le choc comprend une portion supérieure en saillie ou cale permettant d'absorber l'énergie de choc avant ou arrière à une vitesse relativement faible, de 10 km/h, contre une barrière rigide.

Cependant, ce document antérieur ne s'applique pas du tout au problème permettant d'éviter l'endommagement de plusieurs pièces couteuses de l'ensemble arrière du véhicule suite à un choc réparabilité arrière. Le document US 2009/0140546 A1 révèle un ensemble d'extrémité de véhicule selon le préambule de la revendication 1.

La présente invention a pour but de pallier les inconvénients ci-dessus de l'art antérieur.

A cet effet, l'invention propose un ensemble d'extrémité de véhicule, notamment automobile, définit par les caractéristiques de la revendication 1.

Avantageusement, chaque cale présente une structure en nid d'abeilles réalisée en une matière plastique dure.

L'ensemble d'extrémité est un ensemble arrière du véhicule automobile.

L'invention vise également un véhicule automobile, qui est caractérisé en ce qu'il comprend un ensemble d'extrémité arrière tel que défini précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en coupe longitudinale représentant une partie d'un ensemble arrière d'un véhicule automobile de l'art antérieur décrit précédemment ;
- la figure 2 est une vue en perspective de la poutre transversale et des deux absorbeurs de chocs associés faisant partie de l'ensemble arrière de la figure 1 ;
- la figure 3 est une vue agrandie de côté de la partie cerclée en III de la figure 2 ;
- la figure 4 est une vue semblable à celle de la figure 1 et représentant un ensemble arrière en situation d'un choc arrière sur le véhicule ;
- la figure 5 est une vue en coupe longitudinale d'un ensemble arrière d'un véhicule automobile semblable à celle de la figure 1 et qui comporte une cale conforme à l'invention ;
- les figures 6A, 6B ; 7A, 7B ; 8A, 8B représentent les écrasements successifs d'un absorbeur de chocs suite à un choc arrière du véhicule en présence d'une cale standard et d'une cale conforme à l'invention.

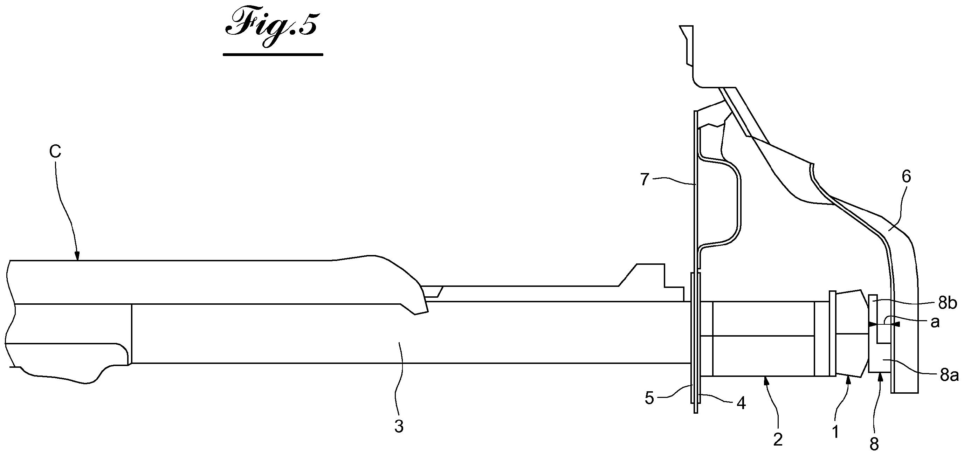

L'invention va être décrite en référence à un ensemble arrière d'un véhicule automobile tel que représenté en figure 5.

Comme cela ressort de la figure 5, l'ensemble arrière du véhicule automobile comprend une poutre creuse 1 de pare-chocs s'étendant transversalement à la direction longitudinale du véhicule et dont les deux extrémités opposées sont fixées chacune à l'extrémité avant d'un absorbeur de chocs 2 à déformation par compression longitudinale dont l'extrémité arrière est reliée à l'avant de l'un de deux longerons 3 de la caisse C du véhicule.

Chaque absorbeur de chocs 2 est fixé en prolongement du longeron correspondant 3 par l'intermédiaire de deux platines 4 solidaires respectivement de l'extrémité arrière de l'absorbeur de chocs 2 et de l'extrémité avant du longeron 3 par l'intermédiaire de boulons de fixation, non représentés.

L'ensemble arrière du véhicule comprend en outre une peau de pare-chocs arrière 6 s'étendant transversalement au véhicule et couvrant la poutre transversale 1 et les absorbeurs de chocs 2.

Un panneau arrière 7 a sa partie d'extrémité inférieure fixée entre les deux platines 4, 5 des absorbeurs de chocs 2 et des longerons 3.

Deux cales arrière incompressibles 8 sont intercalées entre les extrémités la poutre transversale 1 et la peau de pare-chocs arrière 6 au niveau respectivement des deux absorbeurs de chocs 2.

Chaque cale arrière 8 peut présenter une configuration en nid d'abeilles en une matière plastique rigide et peut être fixée à la peau de pare-chocs 6 par clipsage et à la partie d'extrémité correspondante de la poutre 1 par des moyens d'agrafage.

Selon l'invention, chaque cale arrière 8 présente en section transversale une forme en L dont la jambe inférieure 8a, qui s'étend dans un plan parallèle à la direction longitudinale du véhicule, est disposée au niveau de la partie ou section longitudinale inférieure 2b de plus grande raideur de l'absorbeur de chocs 2 en étant fixée en appui entre la peau de pare-chocs 6 et la poutre transversale 1.

La jambe supérieure 8b de la cale arrière 8 s'étend dans un plan perpendiculaire à la direction longitudinale du véhicule et, par conséquent, est perpendiculaire à l'absorbeur de chocs 2 et au longeron 3 correspondants et est disposée au niveau de la partie ou section longitudinale supérieure de raideur moindre 2a de l'absorbeur de chocs 2.

La jambe supérieure 8b de la cale arrière 8 est fixée en appui sur la partie d'extrémité correspondante de la poutre transversale 1 et est espacée longitudinalement de la peau de pare-chocs 6 de la distance a.

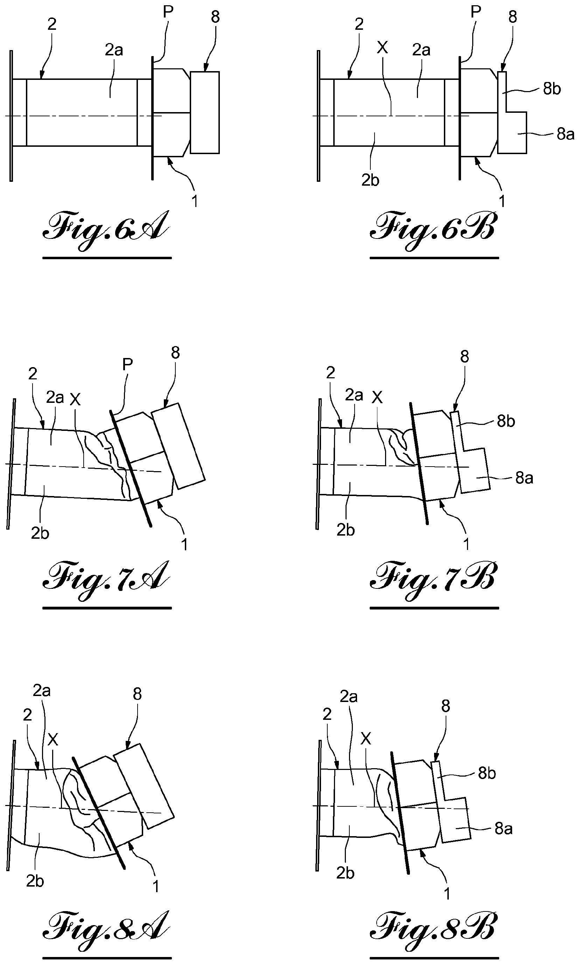

Les figures 6A à 8A représentent l'écrasement d'un absorbeur de chocs 2 lorsque l'ensemble arrière du véhicule est soumis à un choc appelé "choc réparabilité arrière" en utilisant une cale 8 de l'art antérieur tandis que les figures 6B à 8B représentent l'écrasement d'un absorbeur de chocs 2 lorsque l'ensemble arrière est soumis à un même choc en utilisant la cale 8 conforme à l'invention.

Les figures 6A et 6B représentent l'état initial de l'absorbeur de chocs 2 associé à la cale standard 8 (figure 6A) et de l'absorbeur de chocs 2 associé à la cale 8 de l'invention (figure 6B) au début du choc arrière, le plan P de jonction entre la poutre 1 et l'extrémité avant de l'absorbeur de chocs 2 restant perpendiculaire à la direction longitudinale X de l'absorbeur de chocs 2 dans les deux cas de figures, symbolisant ainsi aucune déformation en compression de l'absorbeur de chocs 2 et, par conséquent, aucune déformation du panneau arrière 7 et du longeron 3 associé à la cale 8.

La figure 7A représente l'effort transmis par le choc à toute la section de l'absorbeur 2 par la cale de l'art antérieur 8 se traduisant par un déséquilibre important entre la section supérieure du plus faible raideur 2a par rapport à la section inférieure de plus grande raideur 2b de l'absorbeur de chocs 2 comme symbolisé par le plan P ayant pivoté d'un angle non maîtrisé de la traverse 1. Par contre, la figure 7B représente dans la même situation de choc le déséquilibre maitrisé de la section supérieure 2a de l'absorbeur de chocs 2 par rapport à la section inférieure de plus grande raideur 2b de cet absorbeur grâce à la configuration de la cale 8 de l'invention et se traduisant par le plan P ayant pivoté d'un angle "contenu" de la poutre.

La figure 8A représente un déséquilibre critique, non maitrisé, de la section supérieure 2a de l'absorbeur 2 relativement la section inférieure 2b de cet absorbeur dû à la présence de la cale standard 8 tandis que la figure 8B représente un déséquilibre maitrisé de la section supérieure 2a relativement à la section inférieure 2b de l'absorbeur 2 grâce à la cale 8 de l'invention.

Ainsi, la configuration spécifique de la cale de l'invention à section transversale en L assure un écrasement sensiblement homogène de l'absorbeur de chocs associé à cette cale associé par un choc arrière appliqué au véhicule, ce qui empêche toute instabilité pouvant entrainer des dommages impliquant des coûts de réparation supplémentaires dus à la déformation du panneau arrière 7 et de sa doublure et à la déformation des longerons 3 de l'ensemble arrière du véhicule.

Autrement dit, l'invention évite l'endommagement de pièces coûteuses de l'ensemble arrière du véhicule constituées par le panneau arrière et sa doublure ainsi que les longerons arrière.

L'invention a été décrite en référence à un ensemble arrière d'un véhicule automobile, mais elle peut également s'appliquer à un ensemble avant d'un véhicule automobile dès lors que le recouvrement ou chevauchement entre la poutre de pare-chocs et l'impacteur, (par exemple un mur bumper RCAR) est faible, inférieur à 60mm.

## Revendications

1. Ensemble d'extrémité de véhicule, notamment automobile, comprenant une poutre transversale de pare-chocs (1) dont les deux extrémités opposées sont reliées chacune à l'extrémité avant d'un absorbeur de chocs (2) à déformation par compression dont l'extrémité arrière est reliée à l'avant de l'un de deux longerons (3) de la caisse (C) du véhicule, une peau de pare-chocs (6) couvrant la poutre transversale (1) et les absorbeurs de chocs (2) et une cale (8) intercalée entre la poutre transversale (1) et la peau de pare-chocs (6) au niveau de chaque absorbeur de chocs (2), **caractérisé en ce que** chaque absorbeur de chocs (2) présentant une raideur de compression en partie longitudinale supérieure (2a) plus faible que sa raideur de compression en partie longitudinale inférieure (2b), et **en ce que** chaque cale (8) est une cale compressible et en se qu'elle présente en section transversale une forme en L dont la jambe inférieure (8a), qui s'étend dans un plan parallèle à la direction longitudinale du véhicule, est disposée au niveau de la partie longitudinale inférieure (2b) de chaque absorbeur de chocs (2) en étant en appui entre la peau de pare-chocs (6) et la poutre transversale (1) et la jambe supérieure (8b), qui s'étend dans un plan perpendiculaire à la direction longitudinale du véhicule, est disposée au niveau de la partie longitudinale supérieure (2a) de chaque absorbeur de chocs (2) en étant en appui sur la poutre transversale (1) et espacée de la peau de pare-chocs (6), de manière à assurer un écrasement sensiblement homogène de l'un et/ou l'autre des deux absorbeurs de chocs (2) en cas de choc appliqué sur la poutre transversale (1).

2. Ensemble d'extrémité de véhicule selon la revendication 1, **caractérisé en ce que** chaque cale (8) présente une structure en nid d'abeilles réalisée en une matière plastique dure.

3. Ensemble d'extrémité de véhicule selon la revendication 1, **caractérisé en ce que** cet ensemble est une ensemble arrière de véhicule automobile.

4. Véhicule automobile, **caractérisé en ce qu'**il comprend un ensemble d'extrémité selon l'une quelconque des revendications 1 à 3.

## Patentansprüche

1. Endanordnung eines Fahrzeugs, insbesondere eines Kraftfahrzeugs, die einen Stoßfängerquerträger (1) umfasst, von dem die zwei gegenüberliegenden Enden jeweils mit dem vorderen Ende eines Stoßaufnehmers (2) mit Verformung durch Kompression verbunden sind, dessen hinteres Ende an der Vorderseite eines von zwei Längsträgern (3) der Karosserie (C) des Fahrzeugs verbunden ist, wobei eine Stoßfängerhaut (6) den Querträger (1) und die Stoßaufnehmer (2) abdeckt, und eine Verkeilung (8), die zwischen dem Querträger (1) und der Stoßfängerhaut (6) im Bereich jedes Stoßaufnehmers (2) eingefügt ist, **dadurch gekennzeichnet, dass** jeder Stoßaufnehmer (2) eine Kompressionssteifigkeit im oberen Längsteil (2a) aufweist, die geringer ist als seine Kompressionssteifigkeit im unteren Längsteil (2b), und dass jede Verkeilung (8) eine komprimierbare Verkeilung ist, und dass sie im Querschnitt eine Form eines L aufweist, dessen unterer Schenkel (8a), der sich in einer Ebene parallel zu der Längsrichtung des Fahrzeugs erstreckt, im Bereich des unteren Längsteils (2b) jedes Stoßaufnehmers (2) angeordnet ist, indem er zwischen der Stoßfängerhaut (6) und dem Querträger (1) in Auflage ist, und dessen oberer Schenkel (8b), der sich in einer Ebene senkrecht zu der Längsrichtung des Fahrzeugs erstreckt, im Bereich des oberen Längsteils (2a) jedes Stoßaufnehmers (2) angeordnet ist, indem er auf dem Querträger (1) in Auflage und von der Stoßfängerhaut (6) beabstandet ist, so dass ein im Wesentlichen homogenes Zusammendrücken des einen und/oder des anderen der zwei Stoßaufnehmer (2) im Fall eines Aufpralls, der auf dem Querträger (1) auftrifft, sichergestellt ist.

2. Fahrzeugendanordnung nach Anspruch 1, **dadurch gekennzeichnet, dass** jede Verkeilung (8) eine Struktur in Wabenform aufweist, die aus einem harten Kunststoff hergestellt ist.

3. Fahrzeugendanordnung nach Anspruch 1, **dadurch gekennzeichnet, dass** diese Anordnung eine Kraftfahrzeugheckanordnung ist.

4. Kraftfahrzeug, **dadurch gekennzeichnet, dass** es eine Endanordnung nach einem der Ansprüche 1 bis 3 umfasst.

## Claims

1. An end assembly of a vehicle, in particular a motor vehicle, including a bumper crossbeam (1), the two opposite ends of which are each connected to the front end of a compression deformation shock absorber (2), the rear end of which is connected to the front of one of two side members (3) of the body (C) of the vehicle, a bumper skin (6) covering the crossbeam (1) and the shock absorbers (2) and a spacer (8) inserted between the crossbeam (1) and the bumper skin (6) at the level of each shock absorber (2), **characterized in that** each shock absorber (2) having a compression stiffness in the upper longitudinal part (2a) less than its compression stiffness in the lower longitudinal part (2b) and **in that** each spacer (8) is a compressible spacer and **in that** it has in cross section an L shape, the lower leg (8a) of which, which extends in a plane parallel to the longitudinal direction of the vehicle, is disposed at the level of the lower longitudinal part (2b) of each shock absorber (2), resting between the bumper skin (6) and the crossbeam (1) and the upper leg (8b), which extends in a plane perpendicular to the longitudinal direction of the vehicle, is disposed at the level of the upper longitudinal part (2a) of each shock absorber (2) resting on the crossbeam (1) and spaced apart from the bumper skin (6) so as to ensure a substantially homogenous crushing of the one and/or the other of the two chock absorbers (2) in the case of impact applied on the crossbeam (1).

2. The vehicle end assembly according to Claim 1, **characterized in that** each spacer (8) has a honeycomb structure made from a hard plastic material.

3. The vehicle end assembly according to Claim 1, **characterized in that** this assembly is a rear assembly of a motor vehicle.

4. A motor vehicle, **characterized in that** it includes an end assembly according to any one of Claims 1 to 3.
